**Europäisches Patentamt**

(19) **European Patent Office**

**Office européen des brevets**

(11) Publication number : **0 396 280 B1**

(12) **EUROPEAN PATENT SPECIFICATION**

(45) Date of publication of patent specification :
01.04.92 Bulletin 92/14

(51) Int. Cl.⁵ : **F01L 1/34, F16H 3/56**

(21) Application number : **90304188.7**

(22) Date of filing : **19.04.90**

(54) **Camshaft drive mechanisms.**

(30) Priority : **03.05.89 GB 8910105**

(43) Date of publication of application :
**07.11.90 Bulletin 90/45**

(45) Publication of the grant of the patent :
**01.04.92 Bulletin 92/14**

(84) Designated Contracting States :
**DE FR GB IT SE**

(56) References cited :
**EP-A- 0 063 038**
**WO-A-87/03715**
**DE-A- 3 631 733**

(73) Proprietor : **JAGUAR CARS LIMITED**
**Browns Lane**
**Allesley Coventry CV5 9DR West Midlands**
**(GB)**

(72) Inventor : **Lings, Geoffrey Peter**
**236 Browns Lane**
**Allesley, Coventry CV5 9ED (GB)**

(74) Representative : **Cundy, Anthony Brian et al**
**Anthony Cundy & Company 384 Station Road**
**Dorridge**
**Solihull West Midlands B93 8ES (GB)**

## Description

The present invention relates to a camshaft drive mechanism suitable for internal combustion engines and in particular to a camshaft drive mechanism according to the preamble of claim 1, such as known from WO 87/03715 by means of which the timing of the inlet and/or exhaust valves of an internal combustion engine may be varied.

Modern high performance combustion engines have been developed to give maximum power output at high engine speeds. In order to achieve this, the profile of the cam controlling opening and closing of the valves is designed to give high lift with long duration, in order to encourage gas flow at high speeds. One result of this is that there is a significant overlap period in which both inlet and exhaust valves are open.

With such designs, the gas flow at low engine speeds is very much compromised. Under such conditions, incoming air is spilled back into the manifold due to late closing of the inlet valve, producing a corresponding reduction in the torque output available at low speeds. Also, the exhaust gas is released too early, reducing the expansion ratio of the engine and hence its efficiency. Furthermore, the overlap period where both inlet and exhaust valves are open is too large and allows free flow of air and fuel through the exhaust valve, thus causing emission problems. While these problems apply particularly to high performance engines, a similar compromise must be made on any engine where the valve timing is fixed.

Various methods have been proposed for varying the phase and duration of opening of the inlet and exhaust valves of an internal combustion engine, as a function of speed. One such method, for example as disclosed in the article "Variable Valve Timing Unit Suitable for Internal Combustion Engines" G. E. Rowe proceedings of the Institution of Mechanical Engineers 1972 Volume 186 23/72 pages 302 to 306; European Patent Specification No. 63038 and UK Patent Specification No. 2167123; involves driving the camshaft through an epicyclic gear mechanism and applying a secondary rotation to the epicyclic gear mechanism to vary the phase and/or duration of valve opening. Hitherto, such mechanisms have required the mounting of sun, planet gears and carrier and annulus relative to the camshaft and/or high relative rotational velocities between their components.

The present invention provides a compact and robust mechanism for varying the timing of inlet and exhaust valves in which relative velocities of the components are reduced.

According to the present invention a camshaft drive mechanism comprises a drive element mounted for rotation on one end of a camshaft, a plurality of double planet gears being mounted in angularly spaced relationship on the drive element, said planet gears being freely rotatable relative to the drive element, a first set of gear teeth on each of the double planet gears meshing with a gear non-rotatably mounted on the camshaft, a secondary input shaft mounted coaxially of the camshaft, a second set of teeth on each of the double planet gears meshing with a gear non-rotatably mounted on the secondary input shaft and means being provided to rotate the secondary input shaft, the angular extent of rotation of the secondary input shaft from a datum point being a function of engine speed, characterised in that the ratio of the number of teeth on the gear on the camshaft to those on the gear on the secondary input shaft is greater than 1.

The secondary input shaft may be rotated to an angular extent as a function of engine speed, in any suitable manner, for example a servo motor, electromagnetic device or hydraulic device controlled by an engine speed sensor. This means may produce rotation of the secondary input shaft which is directly proportional to the engine speed, so that the phase relationship between camshaft and crankshaft will vary continuously with engine speed. Alternatively the secondary input shaft may be rotated incrementally so that the phase relationship between camshaft and crankshaft will be adjusted for different engine speed ranges.

The drive element may be a sprocket which is connected to a sprocket on the crankshaft by means of a chain. Alternatively however the drive element may be a toothed pulley which is driven by the crankshaft through a toothed belt or a gear which, is driven through a gear train.

In a conventional four stroke internal combustion engine, the drive ratio between crankshaft and camshaft must be 2:1. As a result, the drive element on the camshaft is twice the diameter of that on the crankshaft or an intermediate drive element must be provided. With the camshaft drive mechanisms of the present invention some or all of the reduction in drive between the crankshaft and camshaft is achieved by means of the gear mechanism between the drive element on the camshaft and the camshaft. Consequently tile size of the drive element on the camshaft may be reduced significantly so that the overall height of the engine may be reduced. For example, the gear mechanism between the drive element on the camshaft and the camshaft may give a drive reduction of 2:1 so that the drive element on the camshaft may be the same size as that on the crankshaft.

As the gear on the camshaft is of greater diameter than that on the secondary input shaft, the camshaft will be driven in the same direction as the drive element mounted thereon, thereby reducing the speed differential therebetween.

As the secondary input shaft is rotated, for a given engine speed, the speed of the camshaft will be increased or decreased, thus advancing or retarding the camshaft relative to the crankshaft, depending on the

EP 0 396 280 B1

direction and angular extent of rotation. Furthermore, by applying an oscillatory rotation to the secondary input shaft as a cam on the camshaft acts to open a valve, the camshaft may be speeded up or slowed down to increase or decrease the duration of opening of the valve.

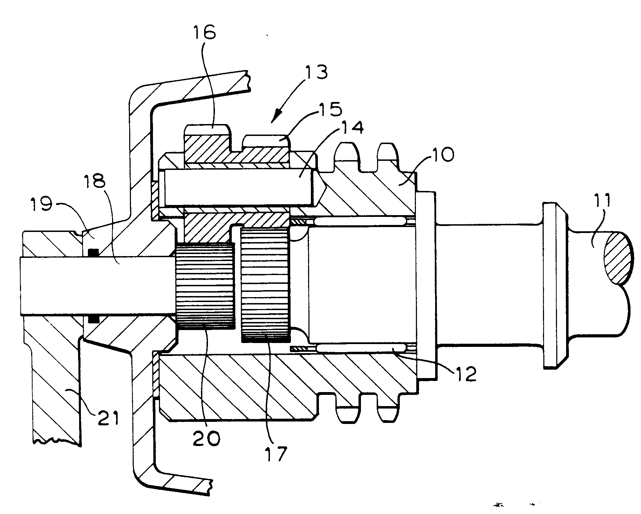

An embodiment of the invention is now described, by way of example only, with reference to the accompanying drawing which illustrates in partial sectional side elevation a drive mechanism in accordance with the present invention.

As illustrated in the accompanying drawing, a drive sprocket 10 is rotatably mounted on a camshaft 11 by means of roller bearing 12. A plurality of planet gears 13 (only one shown) are rotatably mounted at angularly spaced locations on the drive sprocket 10, by means of shafts 14, the shafts 14 being parallel to and equidistantly spaced from the axis of the camshaft 11.

Each planet gear has a first set of gear teeth 15 and a second set of gear teeth 16. The gear teeth 15 mesh with a gear 17 non-rotatably mounted on the camshaft 11. A secondary input shaft 18 is rotatably mounted in a bush 19 coaxially of the camshaft 11. The gear teeth 16 of the planet gears 13 mesh with gear 20, non-rotatably mounted on the shaft 18.

Means, for example a a servo motor or electromagnetic device (not shown) is provided for rotating the shaft 18 by means of crank arm 21.

For the gear train described above:-

$$W_o = W_s G + W_I (1 - G) \quad (1)$$

Where;

$W_I$ = the angular velocity of drive sprocket 10,

$W_s$ = the angular velocity of shaft 18,

$W_o$ = the angular velocity of camshaft 11,

$G$ = $N_{15} N_{20}/N_{16} N_{17}$,

$N_{15}$ = the number of teeth in set 15,

$N_{16}$ = the number of teeth in set 16,

$N_{17}$ = the number of teeth in set 17,

$N_{20}$ = the number of teeth in set 20,

Thus when shaft 10 is stationary

$W_s$ = 0

therefore $W_o = W_I (1 - G)$

When shaft 18 rotates in the opposite direction to the drive sprocket 10.

$$W_s \text{ is negative}$$

$$\text{therefore} \quad W_s G \text{ is negative}$$

$$\text{and from (1)} \quad W_o < W_I (1 - G)$$

that is the angular velocity of the camshaft 11 is reduced.

When shaft 18 rotates in the same direction as the drive sprocket 10.

$$W_s \text{ is positive}$$

$$\text{therefore} \quad W_s G \text{ is positive}$$

$$\text{and from (1)} \quad W_o > W_I (1 - G)$$

that is the angular velocity of the camshaft 11 is increased.

Consequently by rotating shaft 18 in the opposite direction to drive sprocket 10 the camshaft 11 will be retarded relative to the crankshaft, while by rotating shaft 18 in the same direction as drive sprocket 10 the camshaft 11 will be advanced relative to the crankshaft.

If an oscillatory motion is applied to the shaft 18 during valve opening, the camshaft 11 may be slowed down and then speeded up or vice versa, so that the period of opening of a valve, movement of which is controlled by a cam on the camshaft 11, may lie increased or reduced.

In a typical example, the drive sprocket 10 is of the same diameter as the sprocket on the crankshaft so that the drive ratio between the crankshaft and drive sprocket 10 is 1:1. The planet gears have a first set 15 of

3

fifteen teeth and a second set 16 of twenty teeth, gear 17 having eighteen teeth and gear 20 having twelve teeth.

With this example when the shaft 18 is stationary;

$$W_S = 0 \qquad\qquad G = (15 \times 12)/(20 \times 18)$$

$$= 1/2$$

therefore $W_o = W_I/2$

Therefore the overall drive ratio $W_o : W_I = 1:2$

If the shaft 18 is now rotated at half crankshaft speed $W_I$, in the same direction as drive sprocket 10 then

$W_s = W_I/2$

$W_o = (1/2)\ W_I/2 + W_I/2$

$= 3W_I/4$

Therefore the speed of the camshaft 11 is increased by 50%.

While if the shaft 15 is rotated at half crankshaft speed $W_I$, in the opposite direction to drive sprocket 10 then

$W_s = - W_I/2$

$W_o = - (1/2)\ W_I/2 + W_I/2$

$= W_I/4$

Therefore the velocity of the camshaft 11 is reduced by 50%.

The effect of this increase and reduction in the velocity of the camshaft 11 on valve opening and closing will depend on its timing, relative to the point at which the cam lobe acts to open and close the valve. For example, the change in velocity of the camshaft 11 may be timed to advance or retard opening of the valve, advance or retard closing of the valve, and/or increase or decrease the duration of opening of the valve, or merely modify the profile of the opening curve.

For example, if the camshaft 11 is speeded up or slowed down before the cam lobe begins to open the valve, the opening will be advanced or retarded, respectively. Similarly, if the camshaft 11 is speeded up or slowed down after opening but before closing, the closing point will be advanced or retarded. By speeding up rotation before opening and reducing speed while the valve is opened, the duration will be prolonged and conversely slowing down before opening and speeding up while open will reduce the duration. Alternatively, the camshaft may be speeded up throughout the open period thereby reducing the duration or slowed down throughout the open period to increase the duration.

In a further alternative, the camshaft may be speeded up as the valve opens and slowed down as it closes or vice versa to modify the opening curve.

The present invention may be used on single camshaft engines. However due to the overlap of cams controlling the inlet valves of one cylinder with those controlling the exhaust valves of other cylinders the flexibility of the system will be limited. Preferably the camshaft drive disclosed above will be applied to twin camshaft engines so that the timing of the inlet valves and exhaust valves may be varied independently.

## Claims

1. A camshaft drive mechanism comprising a drive element (10) mounted for rotation on one end of a camshaft (11), a plurality of double planet gears (13) being mounted in angularly spaced relationship on the drive element (10), said planet gears (13) being freely rotatable relative to the drive element (10), a first set of gear teeth (15) on each of the double planet gears (13) meshing with a gear (17) non-rotatably mounted on the camshaft (11), a secondary input shaft (18) mounted coaxially of the camshaft (11), a second set of teeth (16) on each of the double planet gears (13) meshing with a gear (20) non-rotatably mounted on the secondary input shaft (18), and means (21) being provided to rotate the secondary input shaft (18), the angular extent of rotation of the secondary input shaft (18) from a datum point being a function of engine speed, characterised in that the ratio of the number of teeth on the gear (17) on the camshaft (11) to those on the gear (20) on the secondary input shaft (18) is greater than 1.

2. A camshaft dive mechanism according to Claim 1 characterised in that a servo motor, electromagnetic device or hydraulic device controls rotation of the secondary input shaft (18).

3. A camshaft drive mechanism according to Claim 2 characterised in that the servo motor, electromagnetic device or hydraulic device is controlled by an engine speed sensor.

4. A camshaft drive mechanism according to any one of claims 1 to 3 characterised in that angular rotation of the secondary input shaft (18) is related to engine speed.

5. A camshaft drive mechanism according to any one of claims 1 to 3 characterised in that angular rotation of the secondary input shaft (18) is controlled incrementally, varying over different ranges of engine speed.

6. A camshaft drive mechanism according to any one of the preceding claims characterised in that the drive ratio between the crankshaft and drive element (10) is 1:1, the ratios of the first and second sets of teeth (15, 16) on the double planet gears (13) and the teeth of the gears (17, 20) mounted on the camshaft (11) and secondary input shaft (18) being such that when the secondary input shaft (18) is stationary, the camshaft (11) will be driven in the same direction as the drive element (10) at half the speed thereof.

7. A camshaft drive mechanism according to any one of the preceding claims characterised in that the secondary input shaft (18) is driven in oscillatory manner, oscillation of the secondary input shaft (18) coinciding with opening of a valve by means of a cam on the camshaft (11), so as to increase or decrease the duration of opening of the valve.


## Patentansprüche

1. Nockenwellenantriebsvorrichtung, die folgendes aufweist: ein Antriebselement (10), das auf einem Ende einer Nockenwelle (11) drehbar angebracht ist, eine Vielzahl an Doppelplanetenrädern (13), die im Winkelabstamd voneinander auf dem Antriebselement (10) angebracht sind, wobei diese Planetenräder (13) in bezug auf das Antriebselement (10) frei drehbar sind, ein erster Getriebezahnkranz (15) auf jedem der Doppelplanetenräder (13), der in ein nicht drehbar auf der Nockenwelle (11) angebrachtes Zahnrad (17) eingreift, eine Sekundärantriebswelle (18), die konzentrisch zur Nokkenwelle (11) angebracht ist, ein zweiter Zahnkranz (16) auf jedem der Doppelplanetenräder (13), der in ein auf der Sekundärantriebswelle (18) nicht drehbar angebrachtes Zahnrad (20) eingreift, und eine Einrichtung (21), die vorgesehen ist, um die Sekundärantriebswelle (18) zu drehen, wobei das Ausmaß der Drehbewegung der Sekundärantriebswelle (18) von einem Bezugspunkt eine Funktion der Motorgeschwindigkeit ist, dadurch gekennzeichnet, daß das Verhältnis der Anzahl an Zähnen auf dem Zahnrad (17) auf der Nockenwelle (11) zu denen auf dem Zahnrad (20) auf der Sekundärantriebswelle (18) größer als 1 ist.

2. Nockenwellenantriebsvorrichtung nach Anspruch 1, dadurch gekennzeichnet, daß ein Hilfsmotor, eine elektromagnetische Vorrichtung oder eine hydraulische Vorrichtung die Drehung der Sekundärantriebswelle (18) steuert.

3. Nockenwellenantriebsvorrichtung nach Anspruch 2, dadurch gekennzeichnet, daß der Hilfsmotor, die elektromagnetische Vorrichtung oder hydraulische Vorrichtung von einem Motorgeschwindigkeitsfühler gesteuert wird.

4. Nockenwellenantriebsvorrichtung nach einem der Ansprüche 1 bis 3, dadurch gekennzeichnet, daß die Drehbewegung der Sekundärantriebswelle (18) in einem Bezug zur Motorgeschwindigkeit steht.

5. Nockenwellenantriebsvorrichtung nach einem der Ansprüche 1 bis 3, dadurch gekennzeichnet, daß die Drehbewegung der Sekundärantriebswelle (18) schrittweise gesteuert wird, so daß sie sich über verschiedene Motorgeschwindigkeitsbereiche ändert.

6. Nockenwellenantriebsvorrichtung nach einem der vorhergehenden Ansprüche, dadurch gekennzeichnet, daß das Antriebsverhältnis zwischen der Kurbelwelle und dem Antriebselement (10) 1:1 beträgt, wobei die Verhältnisse des ersten und zweiten Zahnkranzes (15, 16) auf den Doppelplanetenrädern (13) und die Zähne der Zahnräder (17, 20), die auf der Nockenwelle (11) und der Sekundärantriebswelle (18) angebracht sind, derart sind, daß, wenn die Sekundärantriebswelle (18) feststeht, die Nockenwelle (11) in der gleichen Richtung wie das Antriebselement (10) mit deren halben Geschwindigkeit angetrieben wird.

7. Nockenwellenantriebsvorrichtung nach einem der vorhergehenden Ansprüche, dadurch gekennzeichnet, daß die Sekundärantriebswelle (18) auf hin- und hergehende Weise angetrieben wird, wobei das Hin- und Hergehen der Sekundärantriebswelle (18) mit dem Öffnen eines Ventils mittels eines Nockens auf der Nockenwelle (11) zusammenfällt, um die Länge der Öffnung des Ventils zu erhöhen oder zu verringern.


## Revendications

1. Mécanisme d'entraînement d'arbre à cames, comprenant un élément d'entraînement (10) monté afin qu'il tourne à une première extrémité d'un arbre à cames (11), plusieurs pignons satellites doubles (13) montés sur l'élément d'entraînement (10) et espacés angulairement, les pignons satellites (13) pouvant tourner librement par rapport à l'élément d'entraînement (10), un premier jeu de dents d'engrenage (15) formé sur chacun des pignons satellites doubles (13) et en prise avec un pignon (17) qui est monté sur l'arbre à cames (11) par rapport auquel il ne peut pas tourner, un arbre secondaire d'entrée (18) monté coaxialement à l'arbre à cames (11), un second jeu de dents (16) formé sur chacun des pignons satellites doubles (13) et en prise avec un pignon (20) monté sur l'arbre secondaire d'entrée (18) afin qu'il ne puisse pas tourner par rapport à celui-ci, et un dispositif (21) destiné à faire tourner l'arbre secondaire d'entrée (18), l'amplitude angulaire de rotation de l'arbre secondaire d'entrée (18) par rapport à un point de référence étant fonction de la vitesse du moteur, caractérisé en ce que le rapport du nombre de dents du pignon (17) monté sur l'arbre à cames (11) à celui du pignon (20) monté sur l'arbre secondaire d'entrée (18) est supérieur à 1.

2. Mécanisme d'entraînement d'arbre à cames selon la revendication 1, caractérisé en ce qu'un servomoteur, un dispositif électromagnétique ou un dispositif hydraulique commande la rotation de l'arbre secondaire d'entrée (18).

3. Mécanisme d'entraînement d'arbre à cames selon la revendication 2, caractérisé en ce que le servomoteur, le dispositif électromagnétique ou le dispositif hydraulique est commandé par un capteur de la vitesse du moteur.

4. Mécanisme d'entraînement d'arbre à cames selon l'une quelconque des revendications 1 à 3, caractérisé en ce que la rotation angulaire de l'arbre secondaire d'entrée (18) est liée à la vitesse du moteur.

5. Mécanisme d'entraînement d'arbre à cames selon l'une quelconque des revendications 1 à 3, caractérisé en ce que la rotation angulaire de l'arbre secondaire d'entrée (18) est commandée par paliers, et varie dans différentes plages de vitesses du moteur.

6. Mécanisme d'entraînement d'arbre à cames selon l'une quelconque des revendications précédentes, caractérisé en ce que le rapport d'entraînement du vilebrequin et de l'élément d'entraînement (10) est égal à 1/1, les rapports du premier et du second jeu de dents (15, 16) des pignons satellites doubles (13) et des dents des pignons (17, 20) montés sur l'arbre à cames (11) et sur l'arbre secondaire d'entrée (18) étant tels que, lorsque l'arbre secondaire d'entrée (18) est fixe, l'arbre à cames (11) est entraîné dans le même sens que l'élément d'entraînement (10) à la moitié de la vitesse de celui-ci.

7. Mécanisme d'entraînement d'arbre à cames selon l'une quelconque des revendications précédentes, caractérisé en ce que l'arbre secondaire d'entrée (18) est entraîné suivant un mouvement oscillant, l'oscillation de l'arbre secondaire d'entrée (18) coïncidant avec l'ouverture d'une soupape par une came montée sur l'arbre à cames (11), si bien que la durée d'ouverture de la soupape est augmentée ou réduite.